# EUROPÄISCHE PATENTSCHRIFT

(11) **EP 0 611 340 B1**
(45) Veröffentlichungstag und Bekanntmachung des Hinweises auf die Patenterteilung: **22.10.1997**
(21) Anmeldenummer: 93912790.8
(22) Anmeldetag: 25.05.1993
(51) Int. Cl.: B29C 43/00, E04F 15/022

(54) **HOLZBELAG, INSBESONDERE HOLZBODENBELAG**
WOOD COVERING, IN PARTICULAR FLOOR WOOD COVERING
REVETEMENT EN BOIS, NOTAMMENT POUR PLANCHERS

(30) Priorität: 26.05.1992 DE 4217438; 21.10.1992 DE 4235530; 19.01.1993 DE 4301262
(43) Veröffentlichungstag der Anmeldung: 24.08.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301316
(87) Internationale Veröffentlichungsnummer: WO9324295

(56) Entgegenhaltungen:
- EP-A- 0 105 074
- EP-A- 0 396 891
- DE-A- 2 719 361
- DE-A- 3 715 646
- DE-U- 8 618 554
- FR-A- 2 359 253
- GB-A- 2 085 357
- US-A- 3 729 368
- US-A- 4 865 912

## Beschreibung

Die Erfindung betrifft einen Holzbelag, insbesondere einen Holzbodenbelag mit einer durch eine Holzwerkstoffschicht gebildeten Oberschicht und mit einer Trägerschicht.

Holzbeläge, insbesondere Holzbodenbeläge sind als Parkett, Dielen, Fumiere und dergleichen bekannt. Parkettfußböden werden so verlegt, daß einzelne Parkettplättchen auf eine Unterlage, meistens einen Fußboden, zu verschiedenen Mustern gelegt werden und mit dieser verklebt werden. Es gibt auch fertige Parkettböden, bei denen die einzelnen Plättchen bereits zu Mustern zusammengesetzt und als Fliesen angeboten werden. Auch in diesem Fall müssen die einzelnen Fliesen nebeneinandergelegt und mit dem Unterboden verklebt werden. Neben der schwierigen Verlegung haben die Parkettfußböden den Nachteil, daß sie nach der Verlegung versiegelt und später mit Wachsen gepflegt werden müssen. Diese Stoffe sind meistens gesundheitsschädlich. Bei Dielen treten andere Probleme auf. Die einzelnen Holzdielen müssen auf der Unterlage nebeneinandergelegt und mit dieser verbunden werden. Die Verlegung dieser Böden ist teuer, außerdem müssen sie gestrichen werden. Mit längerer Benutzung stellt sich bei diesen Fußböden ein Knarren ein. Bei allen Holzfußböden treten Dimensionsstabilitätsprobleme auf, insbesondere bei Nässeeinwirkung, da das Holz normalerweise feuchtigkeits- und witterungsempfindlich ist. Darüberhinaus ist die Handhabung vieler Holzstücke oder Holzfliesen beim Transport zum Verlegungsort besonders umständlich. Diese Materialien können auch nicht überall gelagert werden, es sind besonders trockene Räume erforderlich. Darüberhinaus sind Parkettböden und Dielen nicht schalldämmend und daher auch beschränkt einsetzbar.

Aufgabe der vorliegenden Erfindung ist es, einen Holzbelag ,insbesondere einen Hozbodenbelag anzugeben, der die oben genannten Nachteile nicht aufweist, einfach zu verlegen, schalldämmend und tritt elastisch ist.

Diese Aufgabe ist durch den im Anspruch 1 angegebenen Holzbelag gelöst. Das Verfahren zur Herstellung des Holzbelages ist in den Ansprüchen 15 und 16 angegeben. Unteransprüche stellen vorteilhafte Weiterbildungen dar.

Der erfindungsgemäße Holzbelag weist eine durch eine Holzwerkstoffschicht gebildete, begehbare und nach seiner Verlegung sichtbare Oberschicht, die mit einer im verlegten Zustand nicht sichtbaren Trägerschicht verbunden ist. Die Trägerschicht ist gebildet durch durch Druck- und Temperatureinfluß verdichtetes und miteinander zumindest teilweise verbundenes stückiges thermoplastisches Kunststoffolienmaterial. Die Oberschicht und die Trägerschicht sind miteinander fest verbunden. Ein derartiger Holzbelag verbindet die Vorteile eines Naturstoffbelages mit den Vorteilen einer besonders einfachen Handhabung, insbesondere einer besonders einfachen Verlegung als Bodenbelag und einer einfachen Herstellung. Da die Trägerschicht aus mindestens teilweise miteinander verbundenen Stücken aus Kunststoffolienmaterial besteht, und die Verbindung des Kunststoffmaterials einen guten Zusammenhalt aufweist jedoch noch so locker ist, daß Lufteinschlüsse und auch kleine Lunker in dem verdichteten Kunststoffmaterial vorhanden sind, ist sie besonders elastisch. Wird eine Schicht aus einem Holzwerkstoff mit dieser Trägerschicht verbunden, so entsteht ein Holzbelag, der günstige elastische Eigenschaften aufweist: er ist trittelastich und schalldämmend. Die Schalldämmung ist eine der wichtigen Eigenschaften des erfindungsgemäßen Holzbodenbelages. Außerdem ist der erfindungsgemäße Holzbelag dimensionstabil. Durch die aus Kunststoffolienmaterial bestehende Trägerschicht ist der Holzbelag wasserfest und dadurch zusätzlich auch bei Nässe- und Witterungseinflüssen dimensionsstabil. Den thermoplastischen Kunststoffolienschichten können auch andere, nicht thermoplastische Materialien beigemischt werden. Insbesondere, wenn die Elastizität und die schalldämmenden Eigenschaften des Holzbelages erhöht werden sollen, können dem Kunststoffmaterial der Trägerschicht auch textile Materialien zugegeben werden, vorteilhafterweise in Form von Stücken oder Fäden. Durch die Zugabe dieser Materialien wird die Trägerschicht lockerer und dadurchtrittelastischer und schalldämmender.

In einer vorteilhaften Ausführungsform der Erfindung ist vorgesehen, daß das thermoplastische Kunststoffmaterial Polyolefinmaterial ist. Insbesondere sind Polyethylenfolien geeignet. Die Stücke aus Polyethylenfolien sind besonders einfach handhabbar und die Verbindung der einzelnen Stücke des Polyethylenfolienmaterials ist unter Druck und Temperatureinfluß, wobei die Temperatur im Bereich der Erweichungstemperatur des Kunststoffes liegt, sehr gut.

Es ist vorteilhaft, wenn die Trägerschicht über ihren Querschnitt eine Gradientenstruktur aufweist, d.h. wenn sich der Verdichtungsgrad des stückigen Folienmaterials über den Querschnitt kontinuierlich ändert. Nimmt die Dichte in Richtung der Oberschicht / Holzschicht zu und in Gegenrichtung ab, so weist der erfindungsgemäße Holzbelag besonders gute trittelastische Eigenschaften auf, nimmt die Dichte der Trägerschicht in Richtung der Oberschicht zu, so ist der Holzbodenbelag besonders gut schalldämmend.

Die Erfindung sieht vor, daß die Trägerschicht eine Dicke zwischen 3 mm und 10 mm aufweist und daß die Holzschicht mindestens etwa 1 mm und maximal etwa 3 mm beträgt. Ein dünner Holzbelag (z.B. 3 mm Trägerschicht und 1 mm Holzschicht) eignet sich ionsbesondere für Möbel oder Wandverkleidungen. Es ist leicht verformbar und biegbar und kann in einfacher Weise z.B. um Ecken von Möbeln gelegt werden. Außerdem kann ein derartiger Holzbelag als eine Art Holzfurnier verwendet werden; die Trägerschicht wird in diesem Fall durch Temperatureinfluß warmklebrig gemacht und dadurch mit der zu beschichtenden Oberfläche verbunden. Der Belag kann auf die Oberfläche des zu beschichtenden Gegenstandes z.B. "aufgebügelt" werden. Die Holzschicht kann vorteilhafterweise unterschiedlich ausgebildet sein. Sie kann aus Holzfurnier oder Edelholzfurnier bestehen; sie kann aber auch durch Parkettstücke oder Mosaikparkett gebildet werden. Es können auch kleinere Holzstücke in willkürlicher Anordnung auf die Trägerschicht z.B. mittels einer unter Vakuum stehenden Lochwalze aufgebracht werden, wodurch eine völlig neue Oberfläche gebildet wird. Ein derartiger Holzbelag kann sogar eine rauhe Oberfläche aufweisen und zwar dann, wenn Holzspäne verwendet werden. Die Späne können beispielsweise 2 mm bis 3 mm breit und 8 mm bis 15 mm lang sein und ineinandergreifen. Es sind sogar Edelholzspäne einsetzbar, sie verleihen der Oberfläche ein ansprechendes Aussehen. Die Späne können sogar in die Trägerschicht eingedrückt werden, so daß oben unter der Walze oder der Presse eine glatte oder rauhe Oberfläche entsteht. Vorteilhaft ist die Verwendung eines Haftmittels zwischen den Folienstücken und den Holzspänen. Sie können dann sogar geschliffen werden, oder mit einer härtenden Masse, die sie von oben auch zusammenhält ausgefüllt werden. Dadurch wird ein derartiger Holzbodenbelag geglättet und abriebfest gemacht. Ist die Trägerschicht besonders dünn und besteht die Holzschicht z.B. aus einzelnen Holzlamellen, so ist ein derartiger Holzbelag so elastisch, daß er sogar rollbar ist. Diese Ausbildung ist für manche Anwendungen besonders vorteilhaft, z.B. bei Wand- oder Möbelverkleidungen.

Das Aussehen des Holzbelages wird bereits bei seiner Herstellung durch eine gezielte Anordnung der einzelnen Holzplättchen, Holzlamellen oder Holzstücke zu einem Muster festgelegt, so daß fertige Holzbodenbeläge, auch als Fliesen z.B. 50 cm x 50 cm groß, mit einer bestimmten und / oder gewünschten Oberflächenmusterung angeboten werden können.

Eine andere Ausgestaltung der Erfindung ist dann gegeen, wenn die Trägerschicht beidseitig, also ihre Ober- und Unterseite, mit einer Holzschicht versehen ist. Durch eine solche Ausbildung wird ein Holzbelag erhalten, der durch die beidseitige Holzschicht eine Art Holzplatte darstellt, die durch die aus Kunststoff bestehende Trägerschicht wasserdicht ist.

Das Verfahren zur Herstellung des erfindungsgemäßen Holzbodenbelages wird so durchgeführt, daß mehrere Lagen stückigen Kunststoffolienmaterials zu einer Schicht aufgeschüttet werden, auf diese Schicht eine Holzwerkstoffschicht abgelegt wird und die beiden Schichten durch Druck und Temperatureinfluß miteinander verbunden werden, wobei die Kunststoffstücke gleichzeitig verdichtet und untereinander mindestens teilweise verbunden werden. Es ist also ein Arbeitsgang notwendig, um einen verlegefertigen Holzbodenbelag herzustellen. Meistens reicht die Klebewirkung des erweichten Kunststoffmaterials bei erhöhter Temperatur und erhöhtem Druck aus, um die Holzschicht und die Kunststoffschicht zu verbinden. Soll eine noch festere Verbindung erreicht werden oder soll die Trägerschicht unterschiedliche Verdichtungsgrade aufweisen, so ist es sinnvoll, das Kunststoffmaterial mit einer zusätzlich bindenden thermoplastischen Schicht zu versehen, die die Verbindung noch verbessert.

Das Verfahren kann in Abwandlung so durchgeführt werden, daß das Kunststoffmaterial zunächst durch Druck- und Temperatureinfluß vorverdichtet wird, und die Holzschicht auf das vorverdichtete Material abgelegt und unter weiterem Druck- und Temperatureinfluß mit diesem verbunden wird, wobei das Material der Trägerschicht in diesem Verfahrensschritt endverdichtet wird.

Die Gradientenstruktur der Dichte der Trägerschicht über ihren Querschnitt wird durch variable Druck- und Temperatureinwirkung erreicht. In Richtung der abnehmenden Dichte des Kunststoffmaterials nehmen die Temperatur- und Druckwerte ab und umgekehrt.

Durch die Verwendung von schuppenartigen Folienstücken ist der Herstellungsvorgang des erfindungsgemäßen Holzbelages besonders einfach. Die Folienstücke lassen sich sehr einfach dosieren. Eine Aufschichtung des Kunststoffmaterials in einzelnen Lagen ist nicht notwendig, das Material wird vielmehr auf eine erforderliche Höhe aufgerieselt. Einfache Handhabung ergibt sich auch bei Verwendung von sonst räumlich ausgebildeten Folienstücken, denen eine räumliche Form z.B. durch einen Tiefziehprozeß, Teilschrumpfen oder Recken gegeben wurde. Werden Abfallfolien oder Restfolien verwendet, so weisen sie meistens unterschiedliche Dicke auf und werden durch den Zerkleinerungsprozeß wie Reißen oder Schneiden räumlich verformt und somit "volumenvergrößert". Die Höhe des aufgeschichteten bzw. des aufgerieselten Materials kann über die Fläche des herzustellenden Belages unterschiedlich sein. Die Stellen, die mehr Material aufweisen, werden durch den Press-bzw. Walzvorgang höher verdichtet als die Stellen mit weniger Material. Auf diese Weise entstehen Flächenbereiche verteilt unterschiedlicher Verdichtung. Der gesamte Herstellungsvorgang des erfindungsgemäßen Holzbelages ist einfach. Die Verbindung der Oberschicht mit der Trägerschicht kann in einem oder wahlweise mehreren Arbeitsgängen erfolgen, wobei die Temperaturen und die notwendigen Drücke nur so hoch sein müssen, um bei Erweichungstemperatur des Kunststoffes die Verbindung der einzelnen Folienstücke miteinander zu bewirken. Die untere Seite des Fußbodenbelages kann zusätzlich mit einem Glasfaservlies, mit einem Polyestergewebe oder einer Glasfaserlage versehen werden. Diese Schicht erleichtert das Verbinden des Holzbelages mit der Unterlage und trägt auch zur Dimensionsstabilität bei.

Der erfindungsgemäße Holzbodenbelag kann auch in Fliesenform mit unterschiedlich dicken Trägerschichten hergestellt werden, wodurch besonders gut Bodenunebenheiten ausgeglichen werden können. Es ist ein besonderer Vorteil der Erfindung, daß die obere Holzschicht des Fußbodenbelages bereits während ihrer Herstellung mit einer abriebfesten und rutschhemmenden Schicht versehen werden kann. Dadurch entfällt eine nachträgliche, nach der Verlegung des Fußbodensbelages stattfindende Beschichtung/Versiegelung desselben.

Bei Verwendung des Holzbelages als Möbel- oder Wandverkleidung kann seine Oberschicht, wenn sie z.B. aus Holzfurnier besteht geschlitzt werden, damit der Holzbelag auch um Ecken verlegt werden kann. Soll der Holzbelag rollbar sein und ist die Oberschicht durchgehend, so kann sie auch für diesen Zweck geschlitzt werden und anschließend, nach dem Verlegen, können die Schlitzstellen mit einer Füllmasse ausgefüllt werden.

Ein Ausführungsbeispiel der Erfindung wird anhand der nachfolgenden Figuren näher erläutert. Es zeigen:
- Fig. 1: Eine schematische Darstellung eines Schnittes durch den erfindungsgemäßen Holzbelag.
- Fig. 2: Eine schematische Darstellung eines Schnittes durch den erfindungsgemäßen Holzbelag mit einer Gradientenstruktur der Dichte.

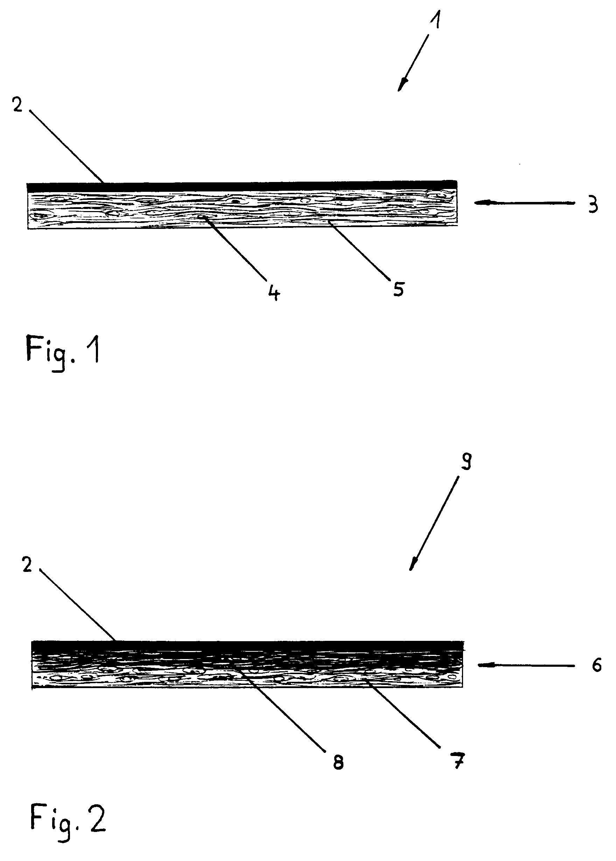

Der Holzbelag 1 weist eine Holzwerkstoffschicht 2 und eine Trägerschicht 3 auf. Die Holzwerkstoffschicht 2 bildet die sichtbare Oberfläche des Holzbelages. Die Trägerschicht 3 ist beim Gebrauch nicht sichtbar, da sie durch die Holzwerkstoffschicht 2 abgedeckt ist. Die Trägerschicht 3 besteht aus miteinander unter Druck und Wärmeeinfluß verbundenen Stücken 5 aus thermoplastischem Kunststoffolienmaterial. Die Struktur der Trägerschicht 3 kann eine konstante Dichte aufweisen (Fig. 1) oder, wie in Fig. 2 dargestellt, eine über den Querschnitt der Trägerschicht 6 sich kontinuierlich ändernde Verdichtung. Für eine besonders gute Trittelastizität ist es vorteilhaft, wenn die Verdichtung des Kunststoffmaterials im oberflächenfernen Bereich 7 eine niedrigere Dichte aufweist als im oberflächennahen Bereich 8. Der Herstellungsvorgang ist besonders voreilhaft, wenn schuppenartige Folienstücke 4 verwendet werden. Die Verdichtung und die Dosierung von derartigen Folienstücken ist sehr einfach.

## Patentansprüche

1. Holzbelag, insbesondere Holzbodenbelag mit einer durch eine Holzwerkstoffschicht (2) gebildeten Oberschicht und mit einer Trägerschicht (3,6), die mit der Oberschicht (2) fest verbunden ist und aus durch Druck- und Temperatureinfluß verdichtetem und miteinander mindestens teilweise verbundenem stückigen thermoplastischen Kunststoffolienmaterial (5) besteht.

2. Holzbelag nach Anspruch 1, **dadurch gekennzeichnet**, daß das stückige Kunststoffolienmaterial Stücke (5) aus Polyolefinfolien, insbesondere Polyethylenfolien sind.

3. Holzbelag nach Anspruch 1 oder 2, **dadurch gekennzeichnet**, daß dem Kunststoffolienmaterial (4,5) andere, nicht thermoplastische Materialien beigemischt sind.

4. Holzbelag nach einem der vorangegangenen Ansprüche, **dadurch gekennzeichnet**, daß die Trägerschicht (6) über ihren Querschnitt unterschiedliche Verdichtungsgrade aufweist.

5. Holzbelag nach Anspruch 4, **dadurch gekennzeichnet,** daß die Dichteänderung kontinuierlich ist.

6. Holzbelag nach einem der vorangegangenen Ansprüche, **dadurch gekennzeichnet**, daß verschiedene Flächenbereiche der Trägerschicht (3,6) unterschiedlich verdichtet sind.

7. Holzbelag nach einem der vorangegangenen Ansprüche, **dadurch gekennzeichnet**, daß die Trägerschicht (3,6) Lagen von Glasfaser oder Glasfaservlies aufweist.

8. Holzbelag nach einem der vorangegangenen Ansprüche, **dadurch gekennzeichnet**, daß die Trägerschicht (3,6) Lufteinschlüsse oder Lunker aufweist.

9. Holzbelag nach einem der vorangegangenen Ansprüche, **dadurch gekennzeichnet**, daß die Holzwerkstoffschicht (2) durch Holzlamellen gebildet ist.

10. Holzbelag nach Anspruch 9, **dadurch gekennzeichnet**, daß der Holzbelag rollbar ist.

11. Holzbelag nach einem der vorangegangenen Ansprüche, **dadurch gekennzeichnet**, daß die Trägerschicht (3,6) beidseitig mit einer Holzschicht versehen ist.

12. Holzbelag nach einem der vorangegangenen Ansprüche, **dadurch gekennzeichnet**, daß die Dicke der Trägerschicht (3,6) 3 mm bis 10 mm beträgt.

13. Holzbelag nach einem der vorangegangenen Ansprüche, **dadurch gekennzeichnet,** daß die Dicke der Holzschicht (2) minimal etwa 1 mm und maximal etwa 3 mm beträgt.

14. Holzbelag nach einem der vorangegangenen Ansprüche, **dadurch gekennzeichnet,** daß eine an der Trägerschicht (3,6) von unten angeordnete Unterschicht vorgesehen ist, die insbesondere aus Glasfaservlies,Glasfaserlage oder Polyestergewebe besteht.

15. Holzbelag nach einem der vorangegangenen Ansprüche, **dadurch gekennzeichnet,** daß das Aussehen der Oberschicht (2) durch gezielte Anordnung des Holzes bestimmt und z.B. mosaikartig ist.

16. Verfahren zur Herstellung eines Holzbelages nach einem der Ansprüche 1 bis 14, **dadurch gekennzeichnet,** daß thermoplastisches stückiges Kunststoffmaterial und / oder Kunststoffolienmaterial in mehreren Lagen zu einer Schicht aufgeschüttet wird, auf diese Schicht eine Holzwerkstoffschicht (2) abgelegt wird und die beiden Schichten durch Druck- und Temperatureinfluß miteinander verbunden werden, wobei die lose aufgeschütteten Kunststoffstücke (4) und/ oder Kunststoffolienstücke (5) unter Bildung einer Trägerschicht verdichtet und untereinander verbunden werden.

17. Verfahren zur Herstellung eines Holzbelages nach einem der Ansprüche 1 bis 15, **dadurch gekennzeichnet,** daß thermoplastisches stückiges Kunststoffolienmaterial in mehreren Lagen zu einer Schicht aufgeschüttet wird und durch Druck- und Temperatureinfluß zu einer Trägerschicht (3,6) verdichtet und mindestens teilweise miteinander verbunden wird, und daß anschließend auf diese Schicht (3,6) eine Holzwerkstoffschicht (2) abgelegt wird und die beiden Schichten durch Druck- und Temperatureinfluß miteinander verbunden werden, wobei die Trägerschicht (3,6) endverdichtet wird.

18. Verfahren nach Anspruch 16 bis 17, **dadurch gekennzeichnet,** daß die Temperatur im Bereich der Erweichungstemperatur der eingesetzten Kunststoffe liegt.

19. Verfahren nach einem der Ansprüche 16 bis 18, **dadurch gekennzeichnet,** daß auf die aufgeschüttete Schicht (3,6) aus Kunststoffolienstücken (4,5) eine zusätzliche Thermoklebeschicht vor der Verbindung mit der Holzschicht (2) aufgegeben wird.

20. Verfahren nach einem der Ansprüche 16 bis 19, **dadurch gekennzeichnet,** daß die Druck- und Temperatureinwirkung durch eine Kalanderwalze aufgebracht wird.

21. Verfahren nach einem der Ansprüche 16 bis 18, **dadurch gekennzeichnet,** daß die Kunststoffolienstücke (5) vor der Verdichtung räumlich ausgebildet sind.

22. Verfahren nach einem der Ansprüche 16 bis 21, **dadurch gekennzeichnet,** daß die Kunststoffolienstücke (5) vor der Verdichtung schuppenartige Ausbildung aufweisen.

23. Verfahren nach einem der Ansprüche 16 bis 22, **dadurch gekennzeichnet,** daß den Kunststoffolienstücken (5) andere Materialien, insbesondere Stücke oder Fäden aus textilen Stoffen beigemischt werden.

24. Verfahren nach einem der Ansprüche 16 bis 23, **dadurch gekennzeichnet,** daß die Schichthöhe des aufgeschütteten Kunststoffmaterials (5) in verschiedenen Flächenbereichen unterschiedlich ist und den Anforderungen an die unterschiedlichen Verdichtungsgrade der Trägerschicht (3,6) entspricht.

## Claims

1. Wood covering, in particular wood floor covering with an upper layer formed by a wood material layer (2) and with a supporting layer (3, 6) which is firmly joined to the upper layer (2) and comprises thermoplastic synthetic resin sheet material (5) in pieces compressed by the action of pressure and temperature and at least partially bonded together.

2. Wood covering according to claim 1, **characterised in that** the synthetic resin sheet material in pieces is in the form of pieces (5) of polyolefin sheet, in particular polyethylene sheet.

3. Wood covering according to claim 1 or 2, **characterised in that** other non-thermoplastic materials are mixed in with the synthetic resin sheet material (4, 5).

4. Wood covering according to one of the foregoing claims, **characterised in that** the supporting layer (6) has a varying degree of density over its cross-section.

5. Wood covering according to claim 4, **characterised in that** the alteration in density is continuous.

6. Wood covering according to one of the foregoing claims, **characterised in that** different regions of the area of the supporting layer (3, 6) are compressed to different degrees.

7. Wood covering according to one of the foregoing claims, **characterised in that** the supporting layer (3, 6) has layers of glass fibre or glass fibre mat.

8. Wood covering according to one of the foregoing claims, **characterised in that** the supporting layer (3, 6) has air inclusions or cavities.

9. Wood covering according one of the foregoing claims, **characterised in that** the wood material layer (2) is formed by wood strips.

10. Wood covering according to claim 9, **characterised in that** the wood covering is capable of being rolled up.

11. Wood covering according to one of the foregoing claims, **characterised in that** the supporting layer (3, 6) is provided with a wood layer on both sides.

12. Wood covering according to one of the foregoing claims, **characterised in that** the thickness of the supporting layer (3, 6) amounts to 3mm to 10mm.

13. Wood covering according to one of the foregoing claims, **characterised in that** the thickness of the wood layer (2) amounts to about a minimum of 1mm and a maximum of about 3mm.

14. Wood covering according to one of the foregoing claims, **characterised in that** an under-layer, in particular made of glass fibre mat, a glass fibre coating or polyester fabric, is provided, arranged underneath the supporting layer (3, 6).

15. Wood covering according to one of the foregoing claims, **characterised in that** the appearance of the upper layer (2) is determined by deliberate arrangement of the wood and for example in the form of a mosaic.

16. Method of manufacturing a wood covering according to one of claims 1 to 14, **characterised in that** pieces of thermoplastic synthetic resin material and/or synthetic resin material are deposited in a number of layers to form a layer, a layer of wood material (2) is deposited on this layer and the two layers are bonded together by the action of pressure and temperature, the loosely deposited pieces (4) of plastics and/or pieces (5) of plastics sheet being compressed and joined together to form a carrier layer.

17. Method of manufacturing a wood covering according to one of claims 1 to 15, **characterised in that** pieces of thermoplastic synthetic resin sheet material are deposited in a number of layers to form a layer and compressed and at least partially joined together by the action of pressure and temperature to form a supporting layer (3, 6) and that subsequently a layer (2) of wood material is deposited on this layer (3, 6) and the two layers are bonded together by the action of pressure and temperature, the supporting layer (3, 6) being given a final compression.

18. Method according to claims 16 to 17, **characterised in that** the temperature lies in the region of the softening temperature of the plastics employed.

19. Method according to one of claims 16 to 18, **characterised in that** an additional hot-melt adhesive coating is applied to the deposited layer (3, 6) of pieces (4, 5) of plastics sheet before joining to the wood layer (2).

20. Method according to one of claims 16 to 19, **characterised in that** the action of pressure and temperature is applied by a calender roll.

21. Method according to one of claims 16 to 18, **characterised in that** the pieces (5) of synthetic resin sheet are formed three-dimensionally before compression.

22. Method according to one of claims 16 to 21, **characterised in that** the pieces (5) of plastics sheet are of flake-like form before compression.

23. Method according to one of claims 16 to 22, **characterised in that** other materials, in particular pieces or threads of textile materials, are mixed in with the pieces (5) of plastics sheet.

24. Method according to one of claims 16 to 23, **characterised in that** the height of the layer of the deposited plastics material (5) differs in different regions of the surface and corresponds to the requirements for the different degrees of compression of the supporting layer (3, 6).

## Revendications

1. Revêtement en bois, notamment revêtement en bois pour planchers, avec une couche supérieure formée par une couche (2) de matériau à base de bois et avec une couche de support (3, 6) qui est solidaire de la couche supérieure (2) et consiste en un matériau (5) à base de films de matière thermoplastique en morceaux comprimés sous l'effet de la pression et de la température et au moins partiellement assemblés entre eux.

2. Revêtement en bois suivant la revendication 1, caractérisé par le fait que le matériau à base de films de matière plastique en morceaux consiste en des morceaux (5) de films de polyoléfines, en particulier de films de polyéthylène.

3. Revêtement en bois suivant la revendication 1 ou 2, caractérisé par le fait qu'au matériau à base de films de matière plastique (4, 5) sont ajoutées d'autres matières non thermoplastiques.

4. Revêtement en bois suivant l'une des revendications précédentes, caractérisé par le fait que la couche de support (6) présente, sur sa section, différents degrés de compression.

5. Revêtement en bois suivant la revendication 4, caractérisé par le fait que la variation en densité est continue.

6. Revêtement en bois suivant l'une des revendications précédentes, caractérisé par le fait que différentes zones de surface de la couche de support (3, 6) sont comprimées de manière différente.

7. Revêtement en bois suivant l'une des revendications précédentes, caractérisé par le fait que la couche de support (3, 6) présente des couches de fibre de verre ou de voile de fibre de verre.

8. Revêtement en bois suivant l'une des revendications précédentes, caractérisé par le fait que la couche de support (3, 6) présente des inclusions d'air ou des retassures.

9. Revêtement en bois suivant l'une des revendications précédentes, caractérisé par le fait que la couche de matériau à base de bois (2) est formée par des lamelles de bois.

10. Revêtement en bois suivant la revendication 9, caractérisé par le fait que le revêtement en bois est enroulable.

11. Revêtement en bois suivant l'une des revendications précédentes, caractérisé par le fait que la couche de support (3, 6) est pourvue des deux côtés d'une couche de bois.

12. Revêtement en bois suivant l'une des revendications précédentes, caractérisé par le fait que l'épaisseur de la couche de support (3, 6) est de 3 mm à 10 mm.

13. Revêtement en bois suivant l'une des revendications précédentes, caractérisé par le fait que l'épaisseur de la couche de bois (2) est de minimum environ 1 mm et de maximum environ 3 mm.

14. Revêtement en bois suivant l'une des revendications précédentes, caractérisé par le fait qu'il est prévu une couche inférieure, disposée du dessous sur la couche de support (3, 6), qui consiste en particulier en un voile de fibre de verre, une couche de fibre de verre ou un tissu polyester.

15. Revêtement en bois suivant l'une des revendications précédentes, caractérisé par le fait que l'aspect de la couche supérieure (2) est déterminée par une disposition appropriée du bois et est, par exemple, en forme de mosaïque.

16. Procédé de fabrication d'un revêtement en bois suivant l'une des revendications 1 à 14, caractérisé par le fait que du matériau à base de matière plastique et/ou du matériau à base de films de matière plastique en morceaux sont entassés en plusieurs couches, pour former une couche, qu'il est déposé, sur cette couche, une couche (2) de matériau à base de bois et que les deux couches sont assemblées l'une à l'autre sous l'effet de la pression et de la température, les morceaux de matière plastique (4) et/ou les morceaux de films de matière plastique (5) entassés librement étant comprimés et au assemblés entre eux, tout en formant une couche de support.

17. Procédé de fabrication d'un revêtement en bois suivant l'une des revendications 1 à 15, caractérisé par le fait que du matériau à base de films de matière thermoplastique en morceaux est entassé en plusieurs couches, pour former une couche, et comprimé et au moins partiellement assemblé sous l'effet de la pression et de la température, pour former une couche de support (3, 6), et qu'il est ensuite déposé, sur cette couche (3, 6), une couche (2) de matériau à base de bois et que ces deux couches sont assemblées l'une à l'autre sous l'effet de la pression et de la température, la couche de support (3, 6) étant définitivement comprimée.

18. Procédé suivant les revendications 16 à 17, caractérisé par le fait que la température se situe dans la plage de la température de ramollissement des matières plastiques utilisées.

19. Procédé suivant l'une des revendications 16 à 18, caractérisé par le fait que sur la couche entassée (3, 6) de morceaux de films de matière plastique (4, 5) est appliquée une couche thermo-adhésive supplémentaire, avant l'assemblage avec la couche de bois (2).

20. Procédé suivant l'une des revendications 16 à 19, caractérisé par le fait que l'effet de la pression et de la température est appliqué par un cylindre de calandrage.

21. Procédé suivant l'une des revendications 16 à 18, caractérisé par le fait que les morceaux de films de matière plastique (5) se présentent, avant la compression, de forme spatiale.

22. Procédé suivant l'une des revendications 16 à 21, caractérisé par le fait que les morceaux de films de matière plastique (5) présentent, avant la compression, une réalisation en forme d'écailles.

23. Procédé suivant l'une des revendications 16 à 22, caractérisé par le fait qu'il est mélangé aux morceaux de films de matière plastique (5) d'autres matières, en particulier des morceaux ou des fils de matières textiles.

24. Procédé suivant l'une des revendications 16 à 23, caractérisé par le fait que la hauteur de couche du matériau à base de matière plastique (5) entassé est différente dans des zones de surface différentes et correspond aux exigences de degrés de compression différents de la couche de support (3, 6).
